# EUROPÄISCHE PATENTANMELDUNG

(11) **EP 2 244 232 A2**
(43) Veröffentlichungstag der Anmeldung: **27.10.2010**
(21) Anmeldenummer: 10158671.7
(22) Anmeldetag: 31.03.2010
(51) Int. Cl.: G07C 9/00

(54) **Datenverarbeitungsvorrichtung mit einem Anzeigeschirm und einer Authentifizierungseinrichtung**

(30) Priorität: 23.04.2009 DE 102009018615
(71) Anmelder: Siemens Aktiengesellschaft, 80333 München (DE)
(72) Erfinder: Beyer, Ralf, 91052 Erlangen (DE)

(57) **Zusammenfassung**

Die Erfindung betrifft eine Datenverarbeitungsvorrichtung (1) mit einem Anzeigeschirm (2) und einer Authentifizierungseinrichtung (4) für ihre Benutzung, wobei hinter dem Anzeigeschirm (2) und integriert in eine zugehörige Anzeigevorrichtung ein berührungsloser Kartenleser (3) angeordnet ist, der mit der Authentifizierungseinrichtung (4) verbunden ist.

## Beschreibung

Die Erfindung bezieht sich auf eine Datenverarbeitungsvorrichtung mit einem Anzeigeschirm und einer Authentifizierungseinrichtung für Ihre Benutzung.

Solche Datenverarbeitungsvorrichtungen werden für eine Vielzahl von Anwendungsfällen benutzt, bei denen eine Bedienung der Datenverarbeitungsvorrichtung an Zulassungsbeschränkungen gebunden ist.

Beispielsweise bei Mobiltelefonen, persönlichen digitalen Assistenten und Laptops ist es üblich, eine Bedienung der betreffenden Geräte erst dann zu gestatten, wenn eine Authentifizierung mit positivem Ergebnis abgeschlossen ist.

Eine solche Authentifizierung erfolgt häufig über sog. Chipkarten, welche auslesbare Authentifizierungsinformationen tragen, die sich auf eine zugeordnete Person beziehen.

Im Bereich des Schienenfahrzeugverkehrs ist es ebenfalls erforderlich, dass Personen, wie beispielsweise der Fahrzeugführer, sich zunächst authentifizieren müssen, bevor eine Bedienung eines Führerpults durch ihn erfolgen kann. Dabei kann gefordert werden, dass die Authentifizierung mit Hilfe eines berührungslosen Leseverfahrens durchführbar sein soll.

In einem ersten Ansatz kann vorgeschlagen werden, im Führerraum, in dem das Führererpult untergebracht ist, zusätzliche Hardware in Form eines berührungslosen Kartenlesers vorzusehen. Dies bedeutet zusätzlichen Platzbedarf sowie weiteren Aufwand für den elektrischen Anschluss des Kartenlesers.

Ausgehend hiervon liegt der Erfindung die Aufgabe zugrunde, insbesondere für das Führerpult eines Schienenfahrzeugs, aber auch allgemein für Datenverarbeitungsvorrichtungen aller Art, eine einfache Möglichkeit zur Authentifizierung gegenüber dem Datenverarbeitungsgerät zu schaffen.

Diese Aufgabe wird bei der eingangs genannten Datenverarbeitungsvorrichtung dadurch gelöst, dass hinter dem Anzeigeschirm und integriert in eine zugehörige Anzeigevorrichtung ein berührungsloser Kartenleser angeordnet ist, der mit der Authentifizierungseinrichtung verbunden ist.

Diese Lösung hat den Vorteil, dass sich durch das Vorsehen des kontaktlosen Kartenlesers kein zusätzlicher Platzbedarf ergibt. Durch die Integration des Kartenlesers in die Anzeigevorrichtung ergibt sich auch ein einfacher elektrischer Anschluss dieses Gerätes.

Dabei wird ausgenutzt, dass die Anzeigeschirme solcher Datenverarbeitungsvorrichtungen üblicher Weise nicht metallisch sind, sondern vielmehr aus Glas oder Kunststoff bestehen. Insofern ergeben sich keinerlei Schwierigkeiten, durch Führen einer Authentifizierungskarte vor einen betreffenden Teil des Anzeigeschirms, hinter dem der berührungslose Kartenleser liegt, eine geeignete Authentifizierung gegenüber der Datenverarbeitungsvorrichtung, insbesondere auch einem Führerpult eines Schienenfahrzeugs, herbeizuführen.

Die Anzeigevorrichtung kann bevorzugt zu einem Führerpult eines Schienenfahrzeugs gehören. Dabei ist es möglich, einen bereits im Stand der Technik vorgesehenen Anzeigeschirm derart nachzurüsten, dass auf seiner Innenseite an geeigneter Stelle ein berührungsloser Kartenleser angebracht ist.

Allgemein kann die Datenverarbeitungseinrichtung jedoch aus der Gruppe ausgewählt sein, die Telefone, persönliche digitale Assistenten und Laptops umfasst, wobei diese Geräte lediglich beispielshalber genannt sind.

Der berührungslose Kartenleser kann bevorzugt ein RFID-Leser sein.

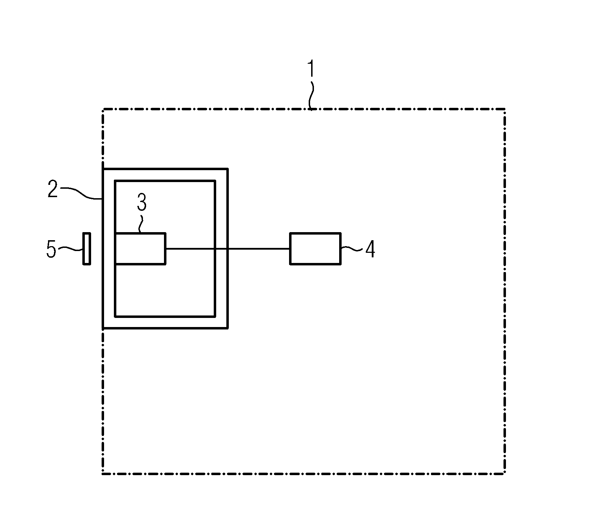

Ein Ausführungsbeispiel der Erfindung wird nachfolgend anhand der Zeichnung noch näher erläutert. Die einzige Figur zeigt eine schematische Ansicht einer Datenverarbeitungsvorrichtung mit Anzeigeschirm und Authentifizierungseinrichtung.

Die in der Figur dargestellte Datenverarbeitungsvorrichtung 1 kann beispielsweise ein Führerpult eines Schienenfahrzeugs sein. Ein solches Führerpult hat typischer Weise mehrere Anzeigeschirme. Einer dieser Anzeigeschirme kann der in der Figur dargestellte Anzeigeschirm 2 sein. Auf einer Innenseite des Anzeigschirms 2 ist ein berührungsloser RFID-Kartenleser 3 angeordnet, der wiederum mit einer Authentifizierungseinrichtung 4 in einer Signalverbindung steht. Die Authentifizierungseinrichtung 4 empfängt von einer Chipkarte 5 empfangene Authentifizierungsinformationen und überprüft diese auf Richtigkeit. Bei zutreffender Authentifizierung wird die Datenverarbeitungsvorrichtung 1 zur Bedienung für die Person freigegeben, der die Chipkarte 5 zugeordnet ist.

Obwohl in diesem Ausführungsbeispiel in erster Linie von einem Führerpult eines Schienenfahrzeugs die Rede ist, lässt sich dieselbe Anordnung auch bei anderen Geräten anwenden. Beispiele dafür sind oben bereits dargestellt.

## Patentansprüche

1. Datenverarbeitungsvorrichtung (1) mit einem Anzeigeschirm (2) und einer Authentifizierungseinrichtung (4) für ihre Benutzung,
**dadurch gekennzeichnet, dass**
hinter dem Anzeigeschirm (2) und integriert in eine zugehörige Anzeigevorrichtung ein berührungsloser Kartenleser (3) angeordnet ist, der mit der Authentifizierungseinrichtung (4) verbunden ist.

2. Datenverarbeitungsvorrichtung (1) nach Anspruch 1,
**dadurch gekennzeichnet, dass**
die Anzeigevorrichtung zu einem Führerpult eines Schienenfahrzeugs gehört.

3. Datenverarbeitungseinrichtung (1) nach Anspruch 1,
**dadurch gekennzeichnet, dass**
sie aus der Gruppe ausgewählt ist, die Telefone, persönliche digitale Assistenten und Laptops umfasst.

4. Datenverarbeitungsvorrichtung (1) nach einem der Ansprüche 1 bis 3,
**dadurch gekennzeichnet, dass**
der berührungslose Kartenleser ein RFID-Leser (3) ist.
